# EUROPEAN PATENT APPLICATION

(11) **EP 3 534 655 A1**
(43) Date of publication of application: **04.09.2019**
(21) Application number: 17864001.7
(22) Date of filing: 22.08.2017
(51) Int. Cl.: H04W 72/04, H04W 72/08, H04W 84/12

(54) **COMMUNICATION APPARATUS, COMMUNICATION CONTROL METHOD, AND PROGRAM**

(30) Priority: 28.10.2016 JP 2016211543
(71) Applicant: Sony Corporation, Tokyo 108-0075 (JP)
(72) Inventor: SUGAYA, Shigeru, Tokyo 108-0075 (JP); MORIOKA, Yuichi, Tokyo 108-0075 (JP); YAMAURA, Tomoya, Tokyo 108-0075 (JP)
(74) Representative: Witte, Weller & Partner Patentanwälte mbB
(86) International application number: PCT/JP2017/029869
(87) International publication number: WO 2018/079025

(57) **Abstract**

[Object] To enable an access point device to grasp interference information without using a management device.

[Solution] Provided is a communication device including: an acquisition unit configured to acquire first parameter information regarding an own BSS; and a transmission unit configured to transmit the first parameter information to a device belonging to another BSS which interferes with the own BSS.

## Description

### Technical Field

The present disclosure relates to a communication device, a communication control method, and a program.

### Background Art

In recent years, a working group of IEEE802.11, and the like, have been considering standardization of a new wireless LAN. Collection methods, usage methods, and the like, for interference information used for interference control have been under consideration. For example, Patent Literature 1 discloses a method in which a database server collects interference information, and an access point device acquires interference information from the database server and uses the interference information for interference control. In addition, Patent Literature 2 discloses a method in which a monitoring server collects interference information, and a power control device acquires interference information from the monitoring server and uses the interference information for interference control.

### Citation List

### Patent Literature

Patent Literature 1: JP 5356364B
Patent Literature 2: JP 5360653B

### Disclosure of Invention

### Technical Problem

However, the methods in Patent Literature 1 and Patent Literature 2 do not enable an access point device to grasp interference information without using a management device such as a database server or a monitoring server.

Therefore, the present disclosure has been made in view of the above-described circumstances, and provides a new and improved communication device, communication control method and program which enables an access point device to grasp interference information without using a management device.

### Solution to Problem

According to the present disclosure, there is provided a communication device including: an acquisition unit configured to acquire first parameter information regarding an own BSS; and a transmission unit configured to transmit the first parameter information to a device belonging to another BSS which interferes with the own BSS.

In addition, according to the present disclosure, there is provided a communication control method executed by a computer, including: acquiring first parameter information regarding an own BSS; and transmitting the first parameter information to a device belonging to another BSS which interferes with the own BSS.

In addition, according to the present disclosure, there is provided a program for causing a computer to realize: acquiring first parameter information regarding an own BSS; and transmitting the first parameter information to a device belonging to another BSS which interferes with the own BSS.

### Advantageous Effects of Invention

According to the present disclosure as described above, the access point device can grasp interference information without using a management device.

Note that the effects described above are not necessarily limitative. With or in the place of the above effects, there may be achieved any one of the effects described in this specification or other effects that may be grasped from this specification.

### Brief Description of Drawings

FIG. 1 illustrates a configuration of a wireless LAN system according to an embodiment of the present disclosure.
FIG. 2 illustrates a configuration of a wireless LAN system according to Patent Literature 1.
FIG. 3 is a sequence diagram illustrating operation in which an STA transmits a report frame to an AP according to the present embodiment.
FIG. 4 is a sequence diagram illustrating operation in which the AP transmits an interference control request frame and operation in which the AP changes parameter information according to the present embodiment.
FIG. 5 illustrates a configuration of a frame transmitted and received in a wireless LAN system according to the present embodiment.
FIG. 6 illustrates a configuration of the PLCP Header in FIG. 5.
FIG. 7 illustrates a configuration of the MAC Header in FIG. 5.
FIG. 8 illustrates configurations of an STA and an AP according to the present embodiment.
FIG. 9 illustrates an example of parameter information stored by a parameter information storage unit according to the present embodiment.
FIG. 10 is a diagram illustrating an example of an information element included in the report frame.
FIG. 11 is a diagram illustrating an example of an information element included in the report frame.
FIG. 12 is a diagram illustrating an example of an information element included in the interference control request frame.
FIG. 13 is a diagram illustrating an example of an information element included in the interference control request frame.
FIG. 14 is a diagram illustrating a flowchart of operation in which the AP receives the report frame from the STA.
FIG. 15A is a diagram illustrating a flowchart of operation in which the AP performs interference control.
FIG. 15B is a diagram illustrating a flowchart of operation in which the AP performs interference control.
FIG. 16 is a diagram illustrating a flowchart of operation in which the AP performs interference control.
FIG. 17 illustrates a configuration of a wireless LAN system according to a first modification.
FIG. 18 is a sequence diagram illustrating operation in which respective APs exchange interference control request frames in the first modification.
FIG. 19 illustrates a configuration of a wireless LAN system according to a second modification.
FIG. 20 is a diagram illustrating an example of preferential treatment in association with interference control.
FIG. 21 is a block diagram illustrating an example of a schematic configuration of a smartphone.
FIG. 22 is a block diagram illustrating an example of a schematic configuration of a car navigation device.
FIG. 23 is a block diagram illustrating an example of a schematic configuration of a wireless access point.

### Mode(s) for Carrying Out the Invention

Hereinafter, a preferred embodiment of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be given in the following order.
1. Overview of wireless LAN system
2. Configuration of device
3. Operation of device
4. Modifications
5. Application examples
6. Supplemental remarks
7. Conclusion

### <1. Overview of wireless LAN system>

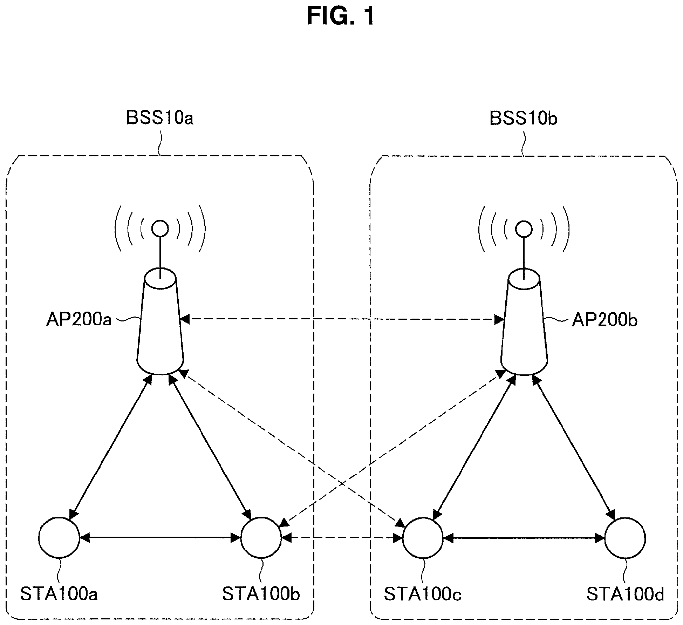

An embodiment of the present disclosure relates to a wireless LAN system. First, an overview of a wireless LAN system according to an embodiment of the present disclosure is described with reference to FIGS. 1 to 7.

### (1-1. Configuration of wireless LAN system)

FIG. 1 illustrates a configuration of a wireless LAN system according to an embodiment of the present disclosure. As illustrated in FIG. 1, the wireless LAN system according to an embodiment of the present disclosure includes access point devices (hereinafter, referred to as "access point (AP)" for convenience) 200 and station devices (hereinafter, referred to as "station (STA)" for convenience) 100. Then, one AP 200 and one or more STAs 100 constitute a basic service set (hereinafter, referred to as "basic service set (BSS)" for convenience) 10.

The wireless LAN system according to an embodiment of the present disclosure may be installed in any place. For example, the wireless LAN system according to the present embodiment may be installed in office buildings, housing, commercial facilities, public facilities, or the like.

In addition, an area of the BSS 10 according to the present embodiment may overlap with an area of another BSS 10 using an overlapping frequency channel (hereinafter, referred to as "overlap basic service set (OBSS)" for convenience); in that case, a signal transmitted from the STA 100 located in the overlap area may interfere with a signal transmitted from the OBSS. When description is given using the example of FIG. 1, an area of the BSS 10a overlaps with part of an area of the BSS 10b that is an OBSS, and the STA 100b and the STA 100c are located in the overlap area. In this case, a signal transmitted from the STA 100b belonging to the BSS 10a may interfere with a signal transmitted from the AP 200b or the STA 100c belonging to the BSS 10b. In addition, a signal transmitted from the STA 100c belonging to the BSS 10b may interfere with a signal transmitted from the AP 200a or the STA 100b belonging to the BSS 10a.

The AP 200 according to the present embodiment is a communication device to be connected to an external network, and to provide communication with the external network for the STA 100. For example, the AP 200 is connected to the Internet, and provides communication between the STA 100 and a device on the Internet or a device connected via the Internet.

The STA 100 according to the present embodiment is a communication device that communicates with the AP 200. The STA 100 may be any communication device. For example, the STA 100 may be a display with a display function, a memory with a storage function, a keyboard and a mouse with an input function, a speaker with a sound output function, or a smartphone with a function of executing advanced calculation processing.

### (1-2. Background)

Then, the background of the present disclosure is described. Before wireless LAN systems have become widely used, an AP had managed each BSS by setting a frequency channel in a manner that a frequency band to be used does not overlap with another BSS; thus, the possibility of signals transmitted from the BSSs interfering with each other had been low. However, in recent years, the widespread use of wireless LAN systems has led to an increase in the number of cases in which frequency bands used in a plurality of adjacent BSSs overlap, which makes signals transmitted from the BSSs more likely to interfere with each other.

To cope with such a situation, the following method has been considered: an AP acquires interference information such as parameter information of a signal transmitted from an OBSS, and changes each of the parameter information in communication in a BSS to which the own device belongs (hereinafter, referred to as "own BSS" for convenience) on the basis of the interference information, thereby preventing occurrence of interference. Examples include a method in which the AP changes transmission power to a low value on the basis of information of interference with the OBSS, and makes a radio wave reachable range smaller, thereby preventing occurrence of interference.

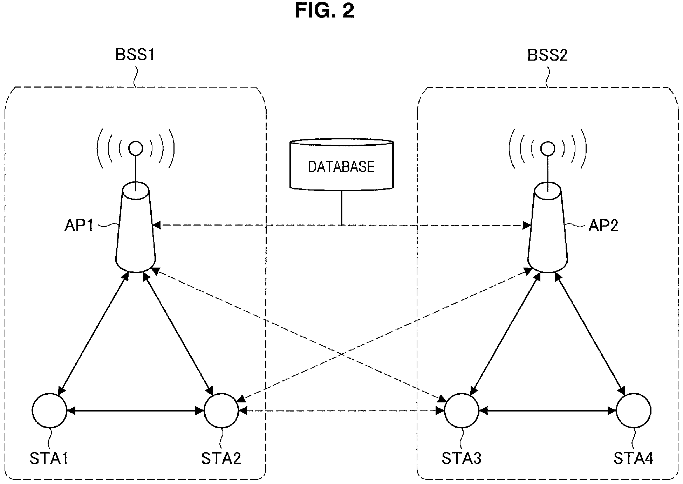

Here, Patent Literature 1 and Patent Literature 2 disclose examples of methods for collecting, managing, and using interference information. Hence, disclosure of Patent Literature 1 will now be described with reference to FIG. 2. FIG. 2 illustrates a configuration of a wireless LAN system according to Patent Literature 1. As illustrated in FIG. 2, in the wireless LAN system according to Patent Literature 1, a BSS 1 includes an AP 1, an STA 1, and an STA2, and a BSS 2 includes an AP 2, an STA 3, and an STA 4. Then, an area of the BSS 1 overlaps with part of an area of the BSS 2 that is an OBSS, and the STA 2 and the STA 3 are located in the overlap area.

In addition, the wireless LAN system according to Patent Literature 1 includes a database connected to the AP 1 and the AP 2 via a network. In the wireless LAN system, the database acquires interference information from each AP and manages the interference information. Then, each AP acquires interference information from the database, and changes each of the parameter information in communication in the own BSS on the basis of the interference information, thereby preventing occurrence of interference.

In addition, although not illustrated, in the disclosure of Patent Literature 2, a monitoring server connected to each AP via a network receives interference information from the AP and manages the interference information. Then, a power control device connected to the monitoring server acquires interference information from the monitoring server, and decides transmission power of each AP on the basis of the interference information.

As described above, in the disclosure of Patent Literature 1 and the disclosure of Patent Literature 2, a management device that collects and manages interference information (referring to the database in Patent Literature 1 and referring to the monitoring server in Patent Literature 2) exists separately from an AP, and the AP acquires interference information from the management device. Here, for example, it is considered to be inappropriate, in terms of cost-effectiveness, to take the trouble to provide a management device even in the case where the number of wireless LANs is small. In addition, from another viewpoint, in the case where a malfunction occurs in a network connecting the management device and each AP, each AP cannot acquire interference information from the management device, and thus cannot perform interference control.

Therefore, a discloser of the present disclosure has achieved the present disclosure in view of the above-described circumstances. In a wireless LAN system according to an embodiment of the present disclosure, an STA 100 can grasp interference information without using a management device by transmitting a report frame to an AP 200. Further, the AP 200 can exchange information to be used for interference control without using a management device by exchanging an interference control request frame including parameter information, or the like, of the own BSS with an AP 200 of an OBSS. Then, the AP 200 can appropriately perform interference control by changing parameter information of the own BSS on the basis of the interference control request frame. Described below are a functional overview, a configuration, operation, modifications, and application examples of a wireless LAN system according to an embodiment of the present disclosure.

### (1-3. Functional overview of wireless LAN system)

The background of the present disclosure has been described above. Now, a functional overview of a wireless LAN system according to an embodiment of the present disclosure will be described.

In the case of receiving signals of the own BSS or an OBSS, the STA 100 in the wireless LAN system according to the present embodiment reports parameter information regarding these signals to the AP 200, instead of a management device as in Patent Literatures. More specifically, in the case of receiving signals of the own BSS or an OBSS, the STA 100 stores parameter information regarding a modulation scheme, transmission power, a BSS identifier, a received signal strength indicator (RSSI), a transmission path utilization time, or the like in a state where the own BSS is distinguished from an OBSS. Then, the STA 100 generates a frame for report including these parameter information (hereinafter, referred to as a "report frame" for convenience) and transmits the report frame to the AP 200 of the own BSS. By this means, the AP 200 can grasp a reception status of a signal of the own BSS of the STA 100, an interference status between the signal of the own BSS and a signal of the OBSS, or the like.

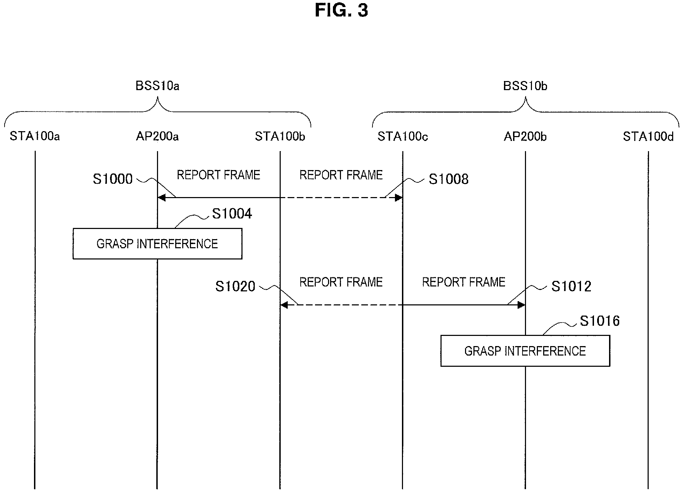

Here, overview of operation in which the STA 100 transmits a report frame to the AP 200 will be described with reference to FIG. 3. FIG. 3 is a sequence diagram illustrating the operation in which the STA 100 transmits the report frame to the AP 200 according to the present embodiment.

In step S1000, an STA 100b generates a report frame including parameter information of an own BSS or an OBSS and transmits the report frame to an AP 200a. By this means, in step S1004, the AP 200a can grasp that there exists an OBSS and that an STA 100b receives a signal of the OBSS. Further, in step S1008, an STA 100c can grasp that the report frame is transmitted from the STA 100b to the AP 200a. By this means, for example, the STA 100c may transmit the report frame to the AP 200b by being triggered by the report frame being transmitted from the STA 100b to the AP 200a.

In step S1012, the STA 100c generates a report frame including parameter information of an own BSS or an OBSS and transmits the report frame to the AP 200b. By this means, in step S1016, the AP 200b can grasp that there exists an OBSS and that the STA 100c receives a signal of the OBSS. Further, in step S1120, the STA 100b can grasp that the report frame is transmitted from the STA 100c to the AP 200b in a similar manner as described above.

As described above, the AP 200 can acquire the report frame including the parameter information of a signal of the own BSS or the OBSS from each STA 100. The AP 200 then stores the parameter information included in the report frame in association with identification information of the STA 100 which is an acquisition source. While description has been provided above that the AP 200 grasps that interference occurs on the basis of the report frame, the AP 200 may grasp that interference occurs on the basis that the own device receives the signal of the OBSS.

Then, in the case where the AP 200 grasps that interference occurs by the above-described method, the AP 200 determines whether or not cooperative operation between the APs 200 is possible. More specifically, in the case where the AP 200 grasps that interference occurs, the AP 200 determines whether or not it is possible to prevent occurrence of interference or reduce influence by the interference by changing the parameter information of the own BSS or the OBSS on the basis of the parameter information of the own BSS and the parameter information of the OBSS. The determination can be performed in various manners. For example, at the STA 100, in the case where RSSI of the signal of the own BSS is high, the AP 200 may determine that it is possible to reduce transmission power. Further, the AP 200 may determine that it is possible to shorten a transmission path utilization time by changing a modulation scheme to a modulation scheme with high transmission efficiency on the basis that communication quality with the STA 100 is favorable. Further, the AP 200 may determine that it is possible to postpone a transmission timing of the signal on the basis of a type of transmission data (such as a type of a frame and a type defined by EDCA).

Then, in the case where the AP 200 determines that cooperative operation between the APs 200 is possible, the AP 200 generates an interference control request frame including parameter information of the own BSS (which will be also referred to as first parameter information), or the like, and transmits the interference control request frame to the AP 200 of the OBSS. By this means, the AP 200 can request the AP 200 of the OBSS to change the parameter information of the OBSS. Further, the AP 200 changes the parameter information of the own BSS as well as requests the AP 200 of the OBSS to perform interference control. Here, while, in the present specification, a case where all the APs 200 of the BSSs 10 which interfere with each other change the parameter information will be mainly described, only one of the APs 200 may change the parameter information.

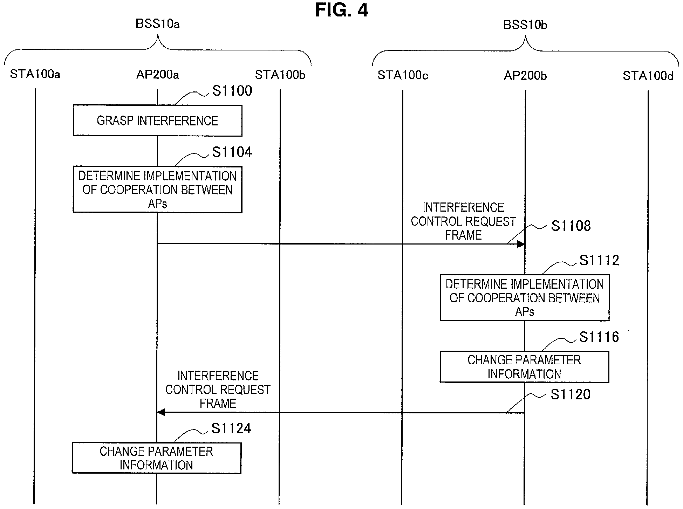

Here, operation in which the AP 200 transmits the interference control request frame and operation in which the AP 200 changes the parameter information will be described with reference to FIG. 4. FIG. 4 is a sequence diagram illustrating operation in which the AP 200 transmits the interference control request frame and operation in which the AP 200 changes the parameter information according to the present embodiment.

First, in step S1100, the AP 200a grasps that interference occurs by existence of the OBSS from the report frame, or the like, received from the STA 100. In step S1104, the AP 200a determines whether or not cooperative operation with the AP 200b belonging to the OBSS is possible. Then, in the case where the AP 200a determines that cooperative operation is possible, the AP 200a generates and transmits an interference control request frame addressed to the AP 200b of the OBSS in step S1108.

In step S1112, the AP 200b receives the interference control request frame, and grasps that interference control is requested from the AP 200a. Then, the AP 200b determines whether or not cooperative operation with the AP 200a belonging to the OBSS is possible. More specifically, the AP 200b determines whether or not interference control can be performed on the basis of parameter information of the OBSS (which will be also referred to as second parameter information), or the like, included in the interference control request frame. Then, in the case where the AP 200b determines that the cooperative operation is possible, in step S1116, the AP 200b performs interference control by changing the parameter information of the own BSS. In step S1120, the AP 200b generates and transmits an interference control request frame addressed to the AP 200a including the changed parameter information. In step S1124, the AP 200a receives the interference control request frame and changes the parameter information of the own BSS on the basis of the changed parameter information of the OBSS. While not illustrated, in step S1120, the AP 200a which receives the interference control request frame may determine again whether or not cooperative operation is possible on the basis of the changed parameter information of the OBSS and change the parameter information of the own BSS in the case where cooperative operation is possible.

Here, the sequence diagram in FIG. 4 is merely an example, and the AP 200 which changes the parameter information first may be arbitrarily determined. More specifically, in the case where the AP 200a determines that cooperative operation is possible, the AP 200a may change the parameter information of the own BSS before transmitting the interference control request frame, and thereafter, generate and transmit the interference control request frame addressed to the AP 200b including the changed parameter information.

As described above, in the wireless LAN system according to the present embodiment, by the STA 100 transmitting the report frame to the AP 200, the AP 200 can grasp interference information without using a management device. Further, by the AP 200 exchanging the interference control request frame with the AP 200 of the OBSS, the AP 200 can exchange information to be used for interference control without using a management device. The AP 200 can then appropriately perform interference control by changing the parameter information of the own BSS on the basis of the interference control request frame.

### (1-4. Frame configuration)

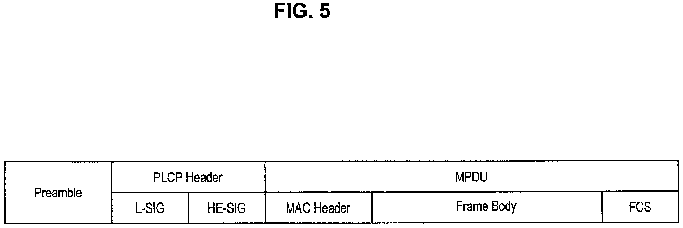

The functional overview of the wireless LAN system according to an embodiment of the present disclosure has been described above. Now, a configuration of a frame transmitted and received by the wireless LAN system according to the present embodiment will be described with reference to FIGS. 5 to 7.

FIG. 5 illustrates a configuration of a frame transmitted and received in the wireless LAN system according to the present embodiment. As illustrated in FIG. 5, a frame transmitted and received by the wireless LAN system according to the present embodiment is a PPDU including Preamble, PLCP Header, and MPDU. The PLCP Header includes L-SIG and HE-SIG. The MPDU includes MAC Header, Frame Body, and Frame Check Sequence (FCS).

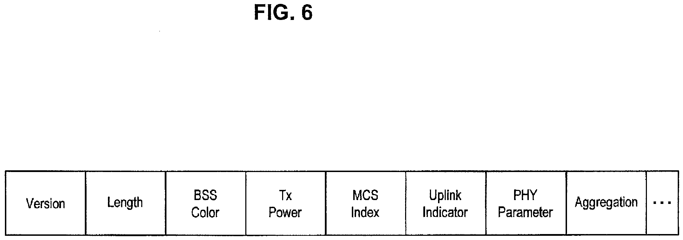

FIG. 6 illustrates a configuration of the PLCP Header in FIG. 5. As illustrated in FIG. 6, the PLCP Header includes BSS Color, Tx Power, MCS Index, Uplink Indicator, and the like. The BSS Color is information for identifying a BSS of a transmitted and received signal. For example, in the BSS Color in the signal to be transmitted and received within a certain BSS, BSS Color information corresponding to the BSS is stored, while, in the BSS Color in an interference control request frame, or the like, to be transmitted and received between different BSSs 10, wild card BSS Color information which can be received at a communication device of any BSS is stored. The STA 100 or the AP 200 that has received a signal determines whether or not the signal is a signal of the own BSS, or whether or not the signal is a signal communicated across BSSs, on the basis of BSS Color. In addition, the Tx Power is transmission power information. In addition, the MCS Index is obtained by indexing a combination of a modulation scheme, a coding rate, and the like. In addition, the Uplink Indicator is a signal transmission direction, indicates that the signal is an uplink signal in the case where the Uplink Indicator is 1, and indicates that the signal is a downlink signal in the case where the Uplink Indicator is 0, for example.

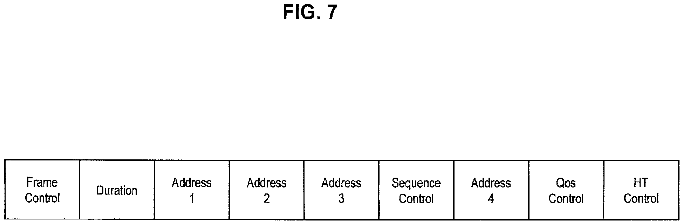

FIG. 7 illustrates a configuration of the MAC Header in FIG. 5. As illustrated in FIG. 7, the MAC Header includes Frame Control, Address 1 to Address 4, Sequence Control, Qos Control, HT Control, and the like. The Frame Control contains information of a protocol version, a frame time, or the like, and Address 1 to Address 4 contain information of a BSSID, a transmission source address, a destination address, or the like. The Sequence Control contains a sequence number, the Qos Control contains Qos parameter information, and the HT Control contains high-speed communication parameter information. Note that Address 1 to Address 4 may be set as Source Address (SA), Destination Address (DA), Tranamit Address (TA) and Receive Address (RA).

### <2. Configuration of device>

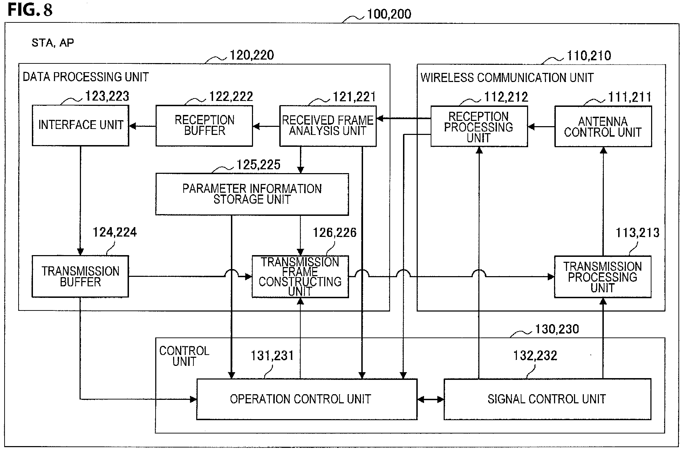

The functional overview of the wireless LAN system according to an embodiment of the present disclosure has been described above. Now, configurations of the STA 100 and the AP 200 according to the present embodiment will be described with reference to FIG. 8. FIG. 8 illustrates configurations of the STA 100 and the AP 200 according to the present embodiment.

### (2-1. Configuration of STA)

First, a configuration of the STA 100 is described. As illustrated in FIG. 8, the STA 100 includes a wireless communication unit 110, a data processing unit 120, and a control unit 130.

### (Wireless communication unit)

As illustrated in FIG. 8, the wireless communication unit 110 includes an antenna control unit 111, a reception processing unit 112, and a transmission processing unit 113. The wireless communication unit 110 functions as a transmission unit and a reception unit.

The antenna control unit 111 controls transmission and reception of signals via at least one antenna. More specifically, the antenna control unit 111 provides the signal received via the antenna to the reception processing unit 112, and transmits the signal generated by the transmission processing unit 113 via the antenna.

The reception processing unit 112 performs frame reception processing on the basis of the signal provided from the antenna control unit 111. For example, the reception processing unit 112 outputs a baseband reception signal by performing analog processing and down-conversion on a signal obtained from an antenna. Then, the reception processing unit 112 calculates correlation between a predetermined signal pattern and the reception signal, while shifting the reception signal that is a target of computation on a time axis, and detects a preamble on the basis of appearance of a peak of correlation. Thus, the reception processing unit 112 can detect a signal of the own BSS, a signal of an OBSS, or the like. In addition, the reception processing unit 112 acquires a frame by performing demodulation, decoding, and the like, on the baseband reception signal, and provides the acquired frame to a received frame analysis unit 121. In addition, the reception processing unit 112 provides information regarding success or failure of reception processing to an operation control unit 131. For example, in the case of failing in reception processing such as demodulation, the reception processing unit 112 provides error occurrence information to the operation control unit 131.

The transmission processing unit 113 performs transmission processing of a frame provided from a transmission frame constructing unit 126. More specifically, the transmission processing unit 113 generates a transmission signal on the basis of a frame provided from the transmission frame constructing unit 126 and parameter information instructed by a signal control unit 132. For example, the transmission processing unit 113 generates a baseband transmission signal by performing encoding, interleaving, and modulation on the frame provided from the transmission frame constructing unit 126 in accordance with coding and modulation schemes, and the like, instructed by the signal control unit 132. In addition, the transmission processing unit 113 performs up-conversion on the baseband transmission signal obtained by the preceding processing.

### (Data processing unit)

As illustrated in FIG. 8, the data processing unit 120 includes the received frame analysis unit 121, a reception buffer 122, an interface unit 123, a transmission buffer 124, a parameter information storage unit 125, and the transmission frame constructing unit 126. The data processing unit 120 functions as an acquisition unit.

The received frame analysis unit 121 performs analysis of a received frame, acquisition of parameter information, or the like. More specifically, the received frame analysis unit 121 analyzes PLCP Header, MAC Header, and the like, included in a frame received by the wireless communication unit 110. Then, the received frame analysis unit determines whether or not the reception signal is a signal of the own BSS on the basis of BSS Color or a BSSID that is identification information of the BSS 10.

In the case where it is determined that the reception signal is a signal of the own BSS, the received frame analysis unit 121 acquires each of the parameter information, and causes the parameter information storage unit 125 to store the parameters as parameter information of the own BSS. In addition, in the case where it is determined that the reception signal is not a signal of the own BSS, the received frame analysis unit 121 acquires each of the parameter information, and causes the parameter information storage unit 125 to store the parameters as parameter information of an OBSS.

Further, in the case where a frame for requesting a report frame from the AP 200 is received, the information is provided to the operation control unit 131. Further, in the case where the interference control request frame from the AP 200 is received, the information is provided to the operation control unit 131. Still further, in the case where address of the frame includes the own device, the received frame analysis unit 121 acquires data, or the like, from the frame and causes the data to be stored in the reception buffer 122.

The reception buffer 122 stores data included in a received frame.

The interface unit 123 is an interface connected to another component included in the STA 100. More specifically, the interface unit 123 performs reception of data that is desired to be transmitted from the other component, for example, an application or a user interface, provision of reception data to the application or the user interface, or the like.

The transmission buffer 124 stores transmission data provided from the interface unit 123.

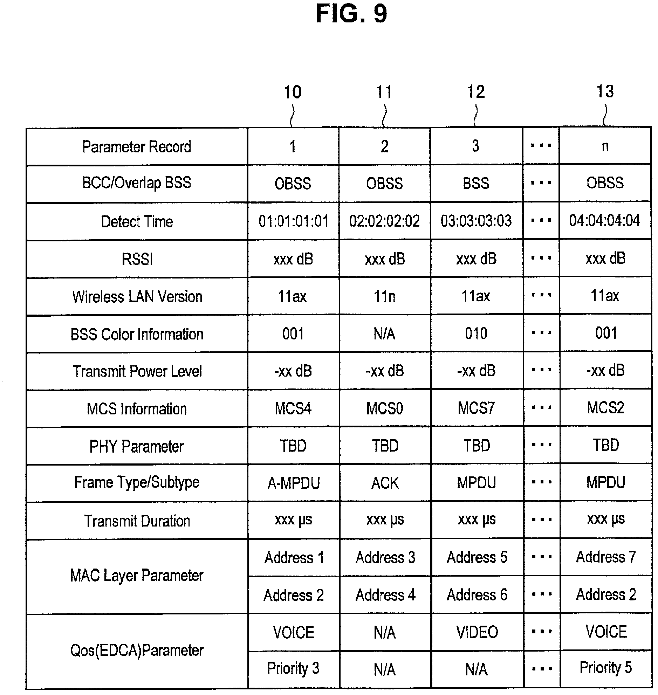

The parameter information storage unit 125 stores parameter information of the own BSS, and parameter information of an OBSS provided from the received frame analysis unit 121. Here, an example of information stored by the parameter information storage unit 125 is described with reference to FIG. 9. FIG. 9 illustrates an example of parameter information stored by the parameter information storage unit 125 according to the present embodiment.

As illustrated in FIG. 9, the parameter information storage unit 125 creates a record for each reception signal, and stores parameter information. Then, the parameter information storage unit 125 adds information of a transmission source network of the reception signal. More specifically, the parameter information storage unit 125 makes it possible to distinguish whether the reception signal is a signal of the own BSS or a signal of an OBSS by containing information of the own BSS or an OBSS in "BSS/Overlap BSS column" in the record (it is written "BSS" instead of "own BSS" in parameter information of the own BSS).

For example, a record 10, a record 11, and a record 13 of FIG. 9 are parameter information of a signal of an OBSS, and a record 12 is parameter information of a signal of the own BSS. The information illustrated in FIG. 9 is merely an example, and the parameter information storage unit 125 stores arbitrary information. For example, the parameter information storage unit 125 may store a type defined by EDCA, or the like, contained as version information, a frame type format, a subtype format, an aggregation format, or a QoS parameter of a wireless LAN.

The transmission frame constructing unit 126 generates a transmission frame. For example, the transmission frame constructing unit 126 generates a report frame on the basis of parameter information stored in the parameter information storage unit 125 and control information set by the operation control unit 131. The transmission frame constructing unit 126 generates a frame (packet) from parameter information for transmission acquired from the parameter information storage unit 125, and performs processing of adding a MAC header for media access control (MAC) and an error detection code to the generated frame, and the like. In addition, the transmission frame constructing unit 126 may generate a transmission frame by using transmission data contained in the transmission buffer 124.

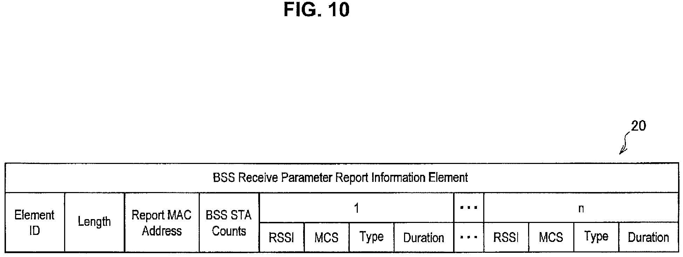

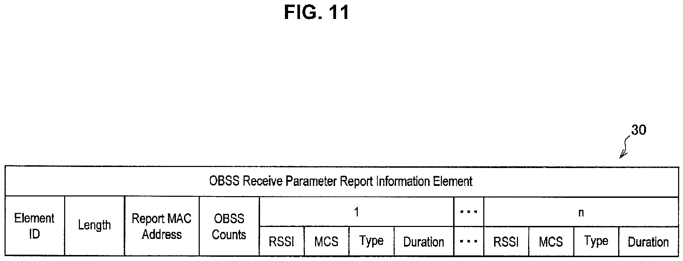

Here, an example of a report frame generated by the transmission frame constructing unit 126 is described with reference to FIGS. 10 and 11. FIG. 10 illustrates an information element 20 utilized as a management frame or an action frame used for transmitting parameter information of the own BSS. As illustrated in FIG. 10, the information element 20 includes Element ID, Length, Report MAC Address, BSS STA Counts, parameter information for each reception signal, and the like. The Element ID is information of a type of information element 20, the Length is information of a length of the information element 20, the Report MAC Address is information of a report destination address, and the BSS STA Counts is information of the number of own BSS signals to be reported.

In addition, parameter information for each own BSS signal can include RSSI, MCS, Type, Duration, and the like, but may be changed as appropriate. Here, the Type is information indicating a type of data, and the Type may include, for example, version information of a wireless LAN frame, information regarding whether or not it is configured by aggregation as a type of frame, or information regarding voice, video, or the like, included in data. In addition, the Duration is information regarding a transmission path utilization time. FIG. 10 is an example, and contents of the information element 20 may be changed as appropriate.

FIG. 11 illustrates an information element 30 used for transmitting parameter information of an OBSS. As illustrated in FIG. 11, the information element 30 includes Element ID, Length, Report MAC Address, OBSS Counts, parameter information for each reception signal, and the like. The OBSS Counts is information of the number of OBSS signals to be reported. Other information is similar to that of the information element 20 in FIG. 10; hence, description is omitted. FIG. 11 is an example, and contents of the information element 30 may be changed as appropriate.

Each information element illustrated in FIGS. 10 to 11 is contained in the Frame Body of FIG. 5 and transmitted. At this time, each information element may be contained in the Frame Body alone, or a plurality of information elements may be coupled and contained in the Frame Body.

### (Control unit)

As illustrated in FIG. 8, the control unit 130 includes the operation control unit 131 and the signal control unit 132.

The operation control unit 131 controls processing regarding transmission of the report frame. More specifically, the operation control unit 131 controls each component for generating the report frame and transmitting the report frame to the AP 200. Here, a timing at which the operation control unit 131 transmits the report frame is arbitrary. For example, in the case where the wireless communication unit 110 receives a frame for requesting the report frame from the AP 200, the operation control unit 131 may control each component so as to transmit the report frame. Further, the operation control unit 131 may control each component to transmit the report frame in the case where it is determined that errors occur at a frequency equal to or higher than a predetermined frequency on the basis of error occurrence information provided from the reception processing unit 112. Further, the operation control unit 131 may control each component to transmit the report frame in the case where a time longer than a predetermined time period has elapsed since a timing at which the report frame has been transmitted last time. The operation control unit 131 can control each component to transmit the report frame at an appropriate timing using these methods.

The signal control unit 132 controls operation of the wireless communication unit 110. More specifically, the signal control unit 132 controls transmission/reception processing of the wireless communication unit 110. For example, the signal control unit 132 causes the wireless communication unit 110 to set control information for transmission and reception on the basis of an instruction from the operation control unit 131. In addition, the signal control unit 132 controls vacant channel detection processing as in CSMA/CA. For example, the signal control unit 132 decides transmission start or transmission standby of a signal on the basis of a carrier sense result and back off time.

### (2-2. Configuration of AP)

The AP 200 may include components similar to those of the STA 100. Of course, the AP 200 may include a component not included in the STA 100 as appropriate.

### (Wireless communication unit)

As illustrated in FIG. 8, the wireless communication unit 210 includes an antenna control unit 211, a reception processing unit 212, and a transmission processing unit 213, and functions as a reception unit and a reporting unit. The functions of the components are similar to those of the STA 100; hence, description is omitted. The wireless communication unit 210 functions as a transmission unit and a reception unit.

### (Data processing unit)

As illustrated in FIG. 8, the data processing unit 220 includes a received frame analysis unit 221, a reception buffer 222, an interface unit 223, a transmission buffer 224, a parameter information storage unit 225, and a transmission frame constructing unit 226. The data processing unit 220 functions as an acquisition unit. Hereinafter, of the functions of the components, description of a function similar to that of a component of the STA 100 is omitted.

The received frame analysis unit 221 performs analysis, or the like, of the received frame. More specifically, in the case where the report frame is received from the STA 100, the received frame analysis unit 221 acquires the parameter information of the own BBS and the parameter information of the OBSS included in the report frame and causes the parameter information to be stored in the parameter information storage unit 225. Further, in the case where the interference control request frame is received from the AP 200 of the OBSS, the received frame analysis unit 221 acquires the parameter information, or the like, of the OBSS included in the interference control request frame and causes the parameter information, or the like, to be stored in the parameter information storage unit 225. Further, the received frame analysis unit 221 may edit these parameter information and cause the edited parameter information to be stored in the parameter information storage unit 225.

As described above, the parameter information storage unit 225 stores the parameter information of the own BSS and the parameter information of the OBSS transmitted from the STA 100. Further, the parameter information storage unit 225 stores the parameter information, or the like, of the OBSS transmitted from the AP 200 of the OBSS.

The transmission frame constructing unit 226 generates a transmission frame. For example, the transmission frame constructing unit 226 generates an interference control request frame on the basis of the parameter information stored in the parameter information storage unit 225 and control information set by the operation control unit 231. Further, the transmission frame constructing unit 226 generates a frame for requesting the report frame to the STA 100 by being controlled by the operation control unit 231.

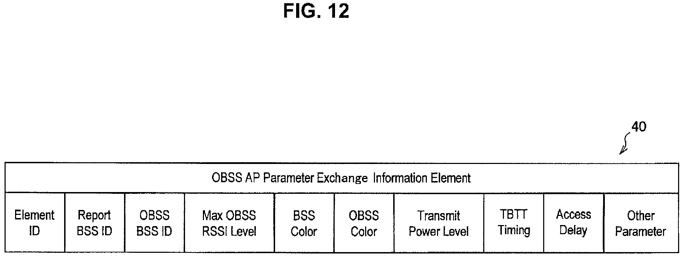

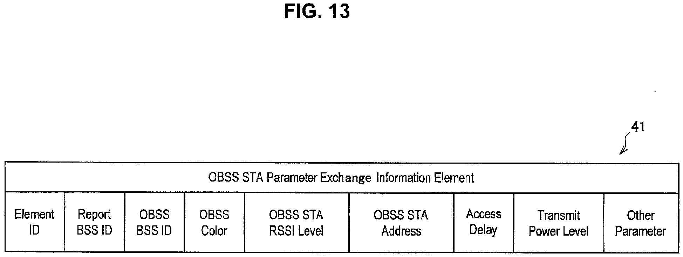

Here, an example of the interference control request frame generated by the transmission frame constructing unit 226 will be described with reference to FIG. 12 and FIG. 13. FIG. 12 and FIG. 13 are diagrams illustrating an example of an information element included in the interference control request frame. The information element 40 illustrated in FIG. 12 includes Element ID, Report BSSID, OBSS BSSID, Max OBSS RSSI Level, BSS Color, OBSS Color, Transmit Power Level, TBTT Timing and Access Delay, or the like.

Element ID is information of a type of the information element 40, Report BSSID is information for identifying the own BSS, OBSS BSSID is information for identifying an OBSS subject to interference, and Max OBSS RSSI Level is information indicating a maximum value of a level of interference from the OBSS. Further, BSS Color is color information for identifying the own BSS, OBSS Color is color information for identifying an OBSS subject to interference, Transmit Power Level is information indicating transmission power, TBTT Timing is timing information of TBTT, and Access Delay is information indicating a maximum value of transmission delay. Here, FIG. 12 is merely an example, and items and order of the items included in the information element 40 may be changed as appropriate. For example, the information element 40 may include modulation scheme (MCS) information, Sensitivity (hereinafter, referred to as "receiving sensitivity" for convenience) information, version information, type information, transmission path utilization time information, frequency information, and the like.

The information element 41 illustrated in FIG. 13 includes information dedicated to the STA 100 of the OBSS. More specifically, the information element 41 includes OBSS STA RSSI Level and OBSS STA Address which are not included in the information element 40. OBSS STA RSSI Level is information indicating a level of interference (received signal strength indicator) from the STA 100 of the OBSS, and OBSS STA Address is information for identifying the STA 100. By this means, the AP 200 of the OBSS which receives the interference control request frame including the information element 41 can grasp influence of interference by each STA 100. By this means, the AP 200 can appropriately change the parameter information for each specific STA 100 instead of changing the parameter information of all the STAs 100 for interference control.

### (Control unit)

As illustrated in FIG. 8, the control unit 230 includes an operation control unit 231 and a signal control unit 232. Because functions of the signal control unit 232 are similar to those of the signal control unit 132 of the STA 100, description will be omitted.

The operation control unit 231 controls processing regarding the report frame, the interference control request frame and the interference control. Concerning the processing regarding the report frame, specifically, the operation control unit 231 controls each component to generate and transmit a frame for requesting the report frame to the STA 100. Here, a timing at which the operation control unit 231 makes a request for the report frame is arbitrary. For example, the operation control unit 231 may calculate average throughput at each STA 100 and, in the case where there exists an STA 100 for which the average throughput is equal to or less than a predetermined threshold, the operation control unit 231 may request for the report frame to the STA 100. Further, the operation control unit 231 may request for the report frame after a predetermined time period has elapsed since a timing at which a request for the report frame has been made last time. Further, the operation control unit 231 may request for the report frame in the case where an error occurrence frequency is equal to or greater than a predetermined threshold on the basis of the error occurrence information provided from the reception processing unit 212.

Concerning the processing regarding the interference control request frame, specifically, the operation control unit 231 specifies the parameter information which is a cause of interference on the basis of content extracted from the report frame and the parameter information of the own BSS in the case where the operation control unit 231 grasps that interference occurs on the basis of the report frame, or the like, from the STA 100. The operation control unit 231 then determines whether or not cooperative operation between the APs 200 is possible by the parameter information being changed, or the like. In the case where the operation control unit 231 determines that cooperative operation is possible, the operation control unit 231 controls each component to generate the interference control request frame including the parameter information of the own BSS and parameter information of other BSSs stored in the parameter information storage unit 225 and transmit the interference control request frame to the AP 200 of the OBSS.

Concerning the processing regarding interference control, specifically, in the case where the operation control unit 231 determines that cooperative operation is possible, the operation control unit 231 prevents occurrence of interference and reduces influence by interference by changing the parameter information of the own BSS. The parameter information to be changed for interference control is arbitrary. An example of the parameter information to be changed for interference control will be described below.

First, a case where the parameter information to be changed for interference control is transmission power will be described. The operation control unit 231 can prevent occurrence of interference by shortening a reaching distance of a signal from the AP 200 by reducing the transmission power. Further, the operation control unit 231 can reduce a degree of degradation of communication performance in the case where interference occurs by reducing the transmission power.

Note that the operation control unit 231 does not have to set the same transmission power to all the STAs 100 belonging to the own BSS, and may set transmission power different for each STA 100. For example, the operation control unit 231 may set transmission power in accordance with communication quality between the AP 200 and each STA 100. More specifically, the operation control unit 231 may set a lower value as the transmission power for the STA 100 as the communication quality between the AP 200 and the STA 100 is more favorable. Note that the communication quality between the AP 200 and each STA 100 can be determined on the basis of RSSI of a signal received by the AP 200 from the STA 100, a transmission error occurrence status, or the like. By this means, the operation control unit 231 can set transmission power more appropriate for each STA 100 compared to a case where the same transmission power is set for all the STAs 100.

Further, in the case where the transmission power is changed, the operation control unit 231 may change other parameter information along with the transmission power. For example, in the case where the transmission power is reduced, the operation control unit 231 may change the modulation scheme (MCS) to a modulation scheme (such as BPSK and QPSK) with low transmission efficiency, with which communication can be performed more reliably along with the transmission power. By this means, the operation control unit 231 can prevent a communication error due to the transmission power being reduced in a state where a modulation scheme with high transmission efficiency is set.

Further, because a reaching distance of the signal becomes shorter by the transmission power being reduced, the operation control unit 231 may reduce receiving sensitivity along with the transmission power. By this means, because the operation control unit 231 can set receiving sensitivity appropriate for the transmission power, it is possible to prevent an unnecessary signal from being sensed. Note that, as the receiving sensitivity, a value different for each BSS may be set, or a value different for each STA may be set. For example, the operation control unit 231 may reduce receiving sensitivity with respect to a signal of the OBSS and improve receiving sensitivity with respect to a signal of the own BSS, or may reduce receiving sensitivity with respect to a signal of the own BSS as well as receiving sensitivity with respect to a signal of the OBSS.

Subsequently, a case where the parameter information to be changed for interference control is a modulation scheme (MCS) will be described. For example, in the case where interference occurs due to a long transmission path utilization time, the operation control unit 231 can prevent occurrence of interference by shortening the transmission path utilization time by changing the modulation scheme to a modulation scheme with high transmission efficiency. Note that the operation control unit 231 may set a modulation scheme different for each STA 100 in a similar manner as described above. For example, the operation control unit 231 may set the modulation scheme in accordance with the communication quality between the AP 200 and each STA 100. More specifically, the operation control unit 231 may set a modulation scheme with higher transmission efficiency as the communication quality between the AP 200 and the STA 100 is more favorable. By this means, the operation control unit 231 can set a modulation scheme more appropriate for each STA 100 compared to a case where the same modulation scheme is set for all the STAs 100. Further, in the case where the modulation scheme is changed, the operation control unit 231 may change other parameter information along with the modulation scheme in a similar manner as described above.

As described above, the parameter information to be changed for interference control is arbitrary. For example, the operation control unit 231 may perform interference control by adjusting a communication time utilized by the own BSS by changing a beacon transmission time (TBTT Timing), the transmission path utilization time, or the like. Further, the operation control unit 231 may perform interference control by changing a frequency band.

Further, in the case where the parameter information of the own BSS is changed, the operation control unit 231 controls each component to generate a frame including the changed parameter and transmit the frame to the STA 100 to notify the STA 100 of the changed parameter information.

### <3. Operation of device>

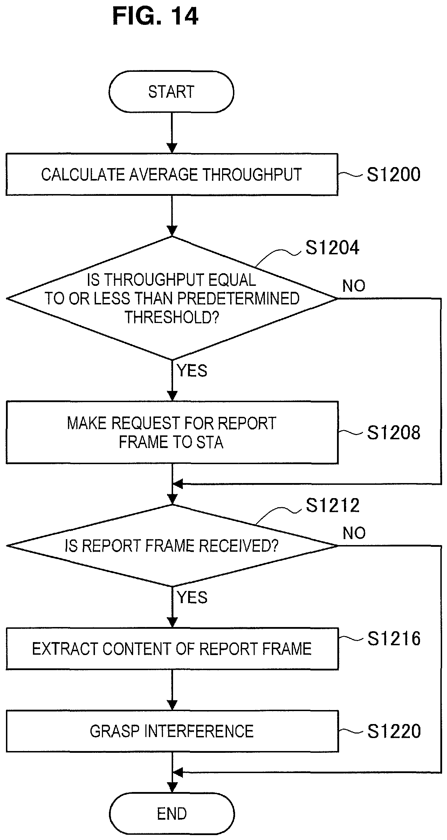

The configurations of the STA 100 and the AP 200 according to the present embodiment have been described above. Subsequently, each operation performed by the AP 200 will be described with reference to FIG. 14 to FIG. 16.

First, operation in which the AP 200 grasps that interference occurs by receiving the report frame from the STA 100 will be described with reference to FIG. 14. FIG. 14 is a diagram illustrating a flowchart of operation in which the AP 200 receives the report frame from the STA 100.

In step S1200, the operation control unit 231 of the AP 200 calculates average throughput at each STA 100. Then, in the case where there exists an STA 100 for which average throughput is equal to or less than a predetermined threshold (step S1204: Yes), in step S1208, the operation control unit 231 controls each component to request for the report frame to the STA 100. Here, as described above, a timing at which the operation control unit 231 makes a request for the report frame is arbitrary. In the case where an STA 100 for which average throughput is equal to or less than the predetermined threshold does not exist (step S1204: No), the processing shifts to step S1212.

In step S1212, in the case where the wireless communication unit 210 receives the report frame from the STA 100 (step S1212: Yes), in step S1216, the received frame analysis unit 221 extracts content of the report frame. Then, in step S1220, the AP 200 grasps that interference occurs on the basis that the report frame includes parameter information of the OBSS, or the like, and the processing is finished. In step 1212, in the case where the wireless communication unit 210 does not receive the report frame (step S1212: No), the processing is finished.

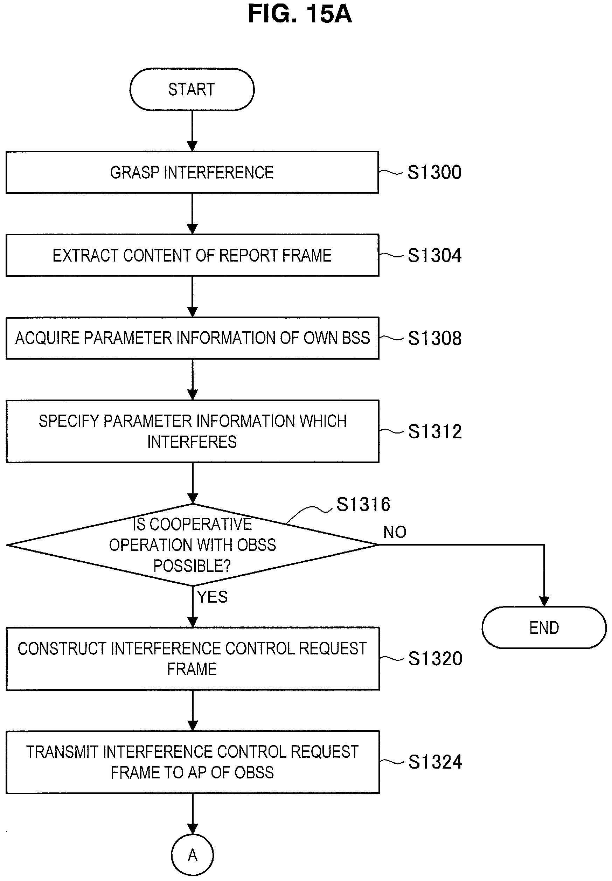

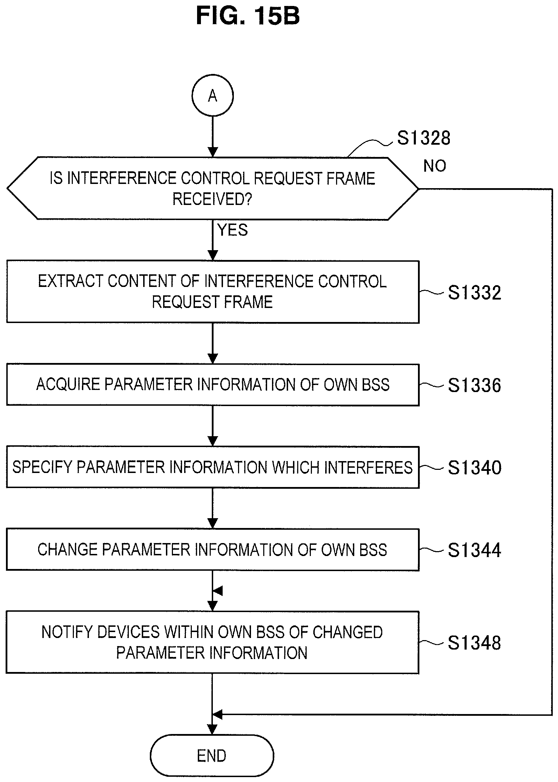

Subsequently, operation of the AP 200a in FIG. 4 will be described with reference to FIG. 15A and FIG. 15B. That is, operation in which the AP 200 performs interference control after the AP 200 transmits the interference control request frame will be described with reference to FIG. 15A and FIG. 15B.

First, in step S1300, the AP 200 grasps that interference occurs. In the present flowchart, it is assumed that the AP 200 grasps that interference occurs on the basis of the report frame from the STA 100 (that is, it is assumed that the AP 200 grasps that interference occurs through the flow in FIG. 14). Then, in step S1304, the received frame analysis unit 221 of the AP 200 extracts content of the report frame. The operation control unit 231 then acquires parameter information of the own BSS in step S1308 and specifies the parameter information which interferes on the basis of the content of the report frame and the parameter information of the own BSS in step S1312.

Then, in step S1316, the operation control unit 231 determines whether or not cooperative operation with the AP 200 of the OBSS is possible. In the case where the operation control unit 231 determines that cooperative operation with the AP 200 of the OBSS is possible (step S1316: Yes), in step S1320, the transmission frame constructing unit 226 constructs the interference control request frame addressed to the AP 200 of the OBSS. In step S1324, the wireless communication unit 210 transmits the interference control request frame. By this means, the AP 200 of the OBSS can perform interference control. That is, in the example in FIG. 4, the AP 200b can perform interference control. Note that, in the case where the operation control unit 231 determines in step S1316 that cooperative operation with the AP 200 of the OBSS is not possible (step S1316: No), the processing is finished.

Then, in the case where the wireless communication unit 210 receives the interference control request frame from the AP 200 of the OBSS after the interference control by the AP 200 of the OBSS (step S1328: Yes), in step S1332, the received frame analysis unit 221 extracts content of the interference control request frame. Then, the operation control unit 231 acquires the parameter information of the own BSS in step S1336, and specifies the parameter information which interferes on the basis of the content of the interference control request frame and the parameter information of the own BSS in step S1340. In step S1344, the operation control unit 231 changes the parameter information of the own BSS. In step S1348, the operation control unit 231 controls each component to notify the STA 100 belonging to the own BSS of the changed parameter information, and the processing is finished. Also in the case where the wireless communication unit 210 does not receive the interference control request frame from the AP 200 of the OBSS in step S1328 (step S1328: No), the processing is finished.

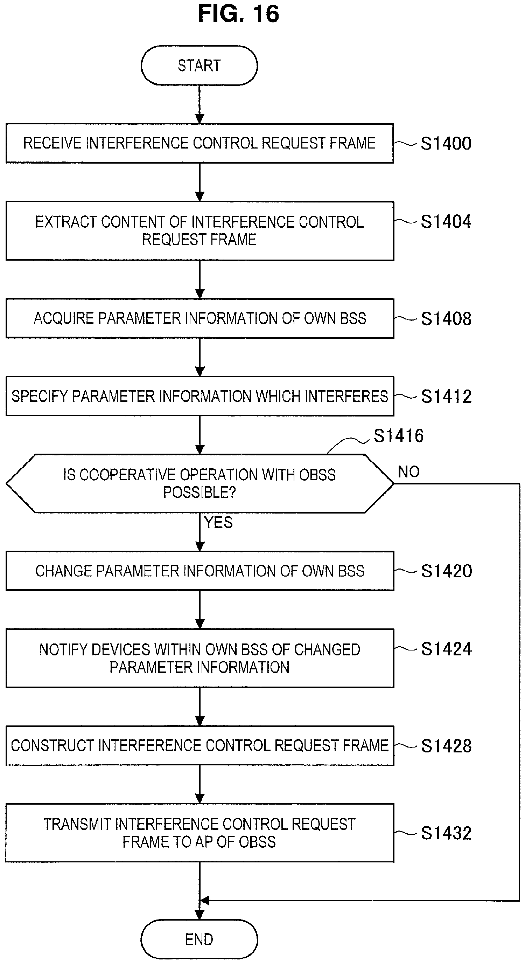

Subsequently, operation of the AP 200b in FIG. 4 will be described with reference to FIG. 16. That is, operation in which the AP 200 transmits the interference control request frame after receiving the interference control request frame and performing interference control will be described with reference to FIG. 16.

First, in step S1400, the wireless communication unit 210 of the AP 200 receives the interference control request frame from the AP 200 of the OBSS. In step S1404, the received frame analysis unit 221 extracts content of the interference control request frame. Then, the operation control unit 231 acquires the parameter information of the own BSS in step S1408, and specifies the parameter information which interferes on the basis of the content of the interference control request frame and the parameter information of the own BSS in step S1412.

Then, in step S1416, the operation control unit 231 determines whether or not cooperative operation with the AP 200 of the OBSS is possible. In the case where the operation control unit 231 determines that cooperative operation with the AP 200 of the OBSS is possible (step S1416: Yes), in step S1420, the operation control unit 231 changes the parameter information of the own BSS. In step S1424, the operation control unit 231 controls each component to notify the STA 100 belonging to the own BSS of the changed parameter information. In step S1428, the transmission frame constructing unit 226 constructs an interference control request frame addressed to the AP 200 of the OBSS. In step S1432, the wireless communication unit 210 transmits the interference control request frame, and the processing is finished. Note that, also in the case where the operation control unit 231 determines that cooperative operation with the AP 200 of the OBSS is not possible in step S1416 (step S1416: No), the processing is finished.

### <4. Modified examples>

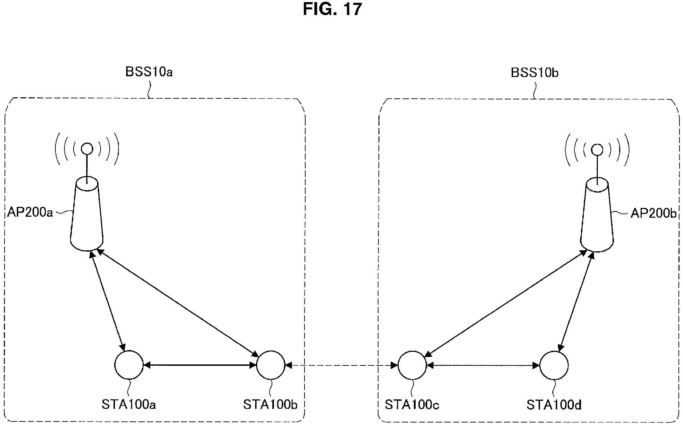

Writing operation performed by the AP 200 according to the present embodiment has been described above. Subsequently, modifications of the present disclosure will be described with reference to FIG. 17 to FIG. 19.

### (4-1. First modification)

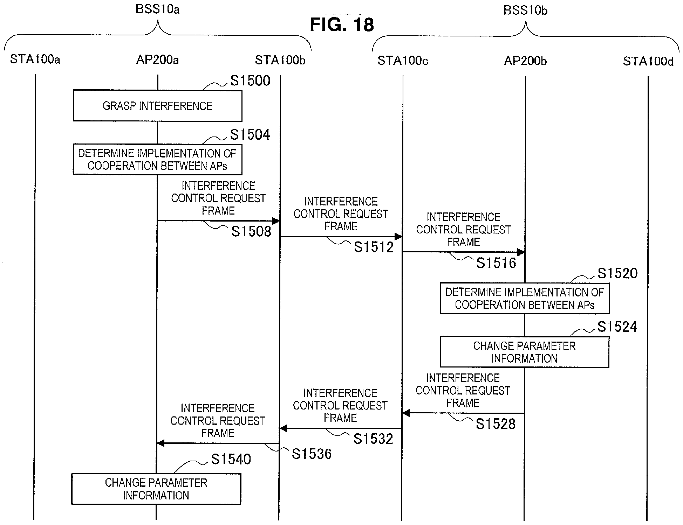

A first modification of the present disclosure will be described first with reference to FIG. 17 and FIG. 18. FIG. 17 is a diagram illustrating a configuration of a wireless LAN system according to the first modification.

The first modification is a case where it is difficult for the APs 200 to directly perform communication. As illustrated in FIG. 17, while an STA 100b belonging to a BSS 10a can perform communication with an STA 100c belonging to a BSS 10b which is the OBSS, an AP 200a cannot perform communication with an AP 200b. In the first modification, the AP 200 exchanges the interference control request frame with other APs 200 by way of the STA 100.

That is, the STA 100 in the first modification controls processing regarding transferring of the interference control request frame. More specifically, the AP 200 determines whether or not the AP 200 can directly perform communication with the AP 200 of the OBSS upon creation of the interference control request frame. This determination method is arbitrary. For example, in the case where the AP 200 receives a signal from the AP 200 of the OBSS, the AP 200 may determine that the AP 200 can directly perform communication with the AP 200 of the OBSS.

Then, in the case where the AP 200 determines that the AP 200 cannot directly perform communication with the AP 200 of the OBSS, the AP 200 tries to transmit the interference control request frame to the AP 200 of the OBSS by way of the STA 100. In this event, for example, the AP 200 may designate BSSID of the AP 200 of the OBSS which becomes the final destination as destination address (DA), may designate the STA 100b which the interference control request frame goes through as transmit address (TA) and may designate the STA 100c which the interference control request frame goes through as receive address (RA) in an Address field of the interference control request frame.

Subsequently, an example of operation of exchanging the interference control request frame in the first modification will be described with reference to FIG. 18. FIG. 18 is a sequence diagram illustrating operation in which each AP 200 exchanges the interference control request frame in the first modification.

First, in step S1500, the AP 200a grasps that interference occurs due to existence of the OBSS from the report frame, or the like, received from the STA 100. In step S1504, the AP 200a determines whether or not cooperative operation with the AP 200b belonging to the OBSS is possible. Then, in the case where the AP 200a determines that cooperative operation is possible, the AP 200a generates an interference control request frame addressed to the AP 200b of the OBSS. In this event, as described above, the AP 200a determines that the AP 200a cannot directly perform communication with the AP 200b of the OBSS, and sets a header of the interference control request frame so that the interference control request frame goes through the STA 100b and the STA 100c.

In step S1508, the AP 200a transmits the interference control request frame, and the STA 100b receives the interference control request frame. In step S1512, the STA 100b transfers the interference control request frame, and the STA 100c receives the interference control request frame. In step S1516, the STA 100c transfers the interference control request frame, and the AP 200b receives the interference control request frame.

In step S1520, the AP 200b receives the interference control request frame and grasps that interference control is requested by the AP 200a. Then, the AP 200b determines whether or not cooperative operation with the AP 200a belonging to the OBSS is possible. In the case where the AP 200b determines that cooperative operation is possible, in step S1524, the AP 200b performs interference control by changing the parameter information of the own BSS. The AP 200b then generates an interference control request frame addressed to the AP 200a including the changed parameter information. In this event, as described above, the AP 200b determines that the AP 200b cannot directly perform communication with the AP 200a of the OBSS and sets a header of the interference control request frame so that the interference control request frame goes through the STA 100c and the STA 100b.

In step S1528, the AP 200b transmits the interference control request frame, and the STA 100c receives the interference control request frame. In step S1532, the STA 100c transfers the interference control request frame, and the STA 100b receives the interference control request frame. In step S1536, the STA 100b transfers the interference control request frame, and the AP 200a receives the interference control request frame. Then, in step S1540, the AP 200a performs interference control by changing the parameter information of the own BSS. Here, the sequence diagram in FIG. 18 is merely an example, and the AP 200 which changes the parameter information first may be arbitrarily determined.

In this manner, with the first modification, even in the case where the APs 200 cannot directly perform communication with each other, the AP 200 can exchange the interference control request frame with the AP 200 of the OBSS by way of the STA 100. For example, even in a situation where the APs 200 of the OBSS cannot necessarily perform normal communication with each other such as in a case where a location of the AP 200 can be changed, the AP 200 can exchange the interference control request frame with the AP 200 of the OBSS.

### (4-2. Second modification)

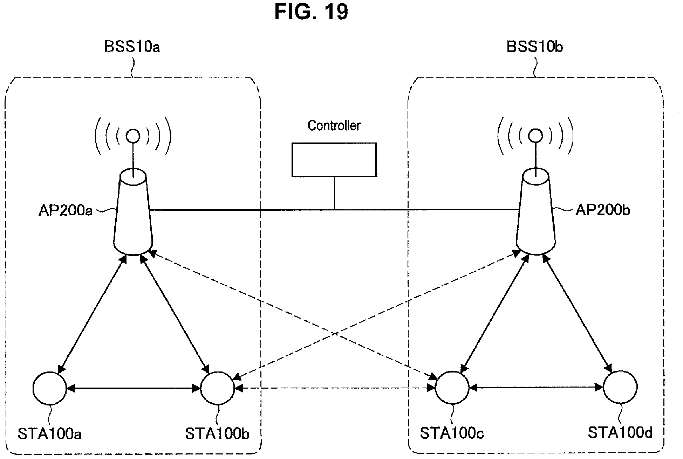

Subsequently, a second modification of the present disclosure will be described with reference to FIG. 19. FIG. 19 is a diagram illustrating a configuration of a wireless LAN system according to the second modification.

The second modification is a case where a controller and a plurality of APs 200 are connected using a wired network. As illustrated in FIG. 19, an AP 200a, an AP 200b and the controller are connected using the wired network. For example, the AP 200a, the AP 200b and the controller may be connected using an Ethernet cable. In the second modified example, the AP 200 transmits the interference control request frame to the controller and exchange the interference control request frame with other APs 200 by way of the wired network. In the second modified example, the controller may perform interference control or each AP 200 may perform interference control. As suggested in the second modification, the present disclosure can be applied to wireless LAN systems having various network configurations.

### <5. Application examples>

The technology according to the present disclosure can be applied to various products. For example, the STA 100 may be realized as mobile terminals such as smartphones, tablet personal computers (PCs), notebook PCs, portable game terminals, or digital cameras, fixed-type terminals such as television receivers, printers, digital scanners, or network storages, or car-mounted terminals such as car navigation devices. In addition, the STA 100 may be realized as terminals that perform machine to machine (M2M) communication (also referred to as machine type communication (MTC) terminals) such as smart meters, vending machines, remotely controlled monitoring devices, or point of sale (POS) terminals. Furthermore, the STA 100 may be wireless communication modules mounted in such terminals (for example, integrated circuit modules configured by one die).

On the other hand, for example, the AP 200 may be realized as a wireless LAN access point (also referred to as a wireless base station) which has a router function or does not have a router function. The AP 200 may be realized as a mobile wireless LAN router. The AP 200 may also be a wireless communication module (for example, an integrated circuit module configured with one die) mounted on such devices.

### (5-1. First application example)

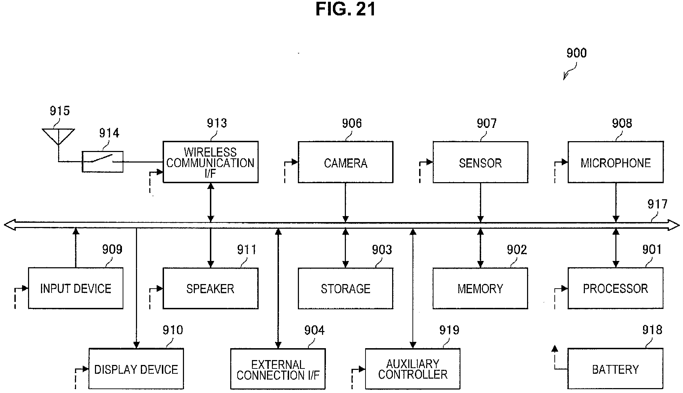

FIG. 21 is a block diagram illustrating an example of a schematic configuration of a smartphone 900 to which the technology of the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

The processor 901 may be, for example, a central processing unit (CPU) or a system on chip (SoC), and controls functions of an application layer and other layers of the smartphone 900. The memory 902 includes random access memory (RAM) and read only memory (ROM), and stores data and programs executed by the processor 901. The storage 903 can include a storage medium such as a semiconductor memory or a hard disk. The external connection interface 904 is an interface for connecting an externally attachable device such as a memory card or a universal serial bus (USB) device to the smartphone 900.

The camera 906 has an image sensor, for example, a charge coupled device (CCD) or a complementary metal oxide semiconductor (CMOS), to generate captured images. The sensor 907 can include a sensor group including, for example, a positioning sensor, a gyro sensor, a geomagnetic sensor, an acceleration sensor, and the like. The microphone 908 converts sounds input to the smartphone 900 into audio signals. The input device 909 includes, for example, a touch sensor that detects touches on a screen of the display device 910, a key pad, a keyboard, buttons, switches, and the like, to receive operation or information input from a user. The display device 910 has a screen such as a liquid crystal display (LCD), or an organic light emitting diode (OLED) display to display output images of the smartphone 900. The speaker 911 converts audio signals output from the smartphone 900 into sounds.

The wireless communication interface 913 supports one or more wireless LAN standards of IEEE 802.11a, 11b, 11g, 11n, 11ac, 11ad, and 11ax and the like, to establish wireless communication. The wireless communication interface 913 can communicate with another device via a wireless LAN access point in an infrastructure mode. In addition, the wireless communication interface 913 can directly communicate with another device in a direct communication mode such as an ad hoc mode or Wi-Fi Direct (registered trademark). Note that, Wi-Fi Direct is different from the ad hoc mode. One of two terminals operates as an access point, and communication is performed directly between the terminals. The wireless communication interface 913 can typically include a baseband processor, a radio frequency (RF) circuit, a power amplifier, and the like. The wireless communication interface 913 may be a one-chip module on which a memory that stores a communication control program, a processor that executes the program, and a relevant circuit are integrated. The wireless communication interface 913 may support another kind of wireless communication scheme such as a cellular communication scheme, a near-field communication scheme, or a proximity wireless communication scheme in addition to the wireless LAN scheme. The antenna switch 914 switches a connection destination of the antenna 915 among a plurality of circuits (for example, circuits for different wireless communication schemes) included in the wireless communication interface 913. The antenna 915 has a single or a plurality of antenna elements (for example, a plurality of antenna elements constituting a MIMO antenna), and is used for transmission and reception of wireless signals through the wireless communication interface 913.

Note that the smartphone 900 may include a plurality of antennas (for example, antennas for a wireless LAN or antennas for a proximity wireless communication scheme, or the like), without being limited to the example of FIG. 21. In this case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 with each other. The battery 918 supplies electric power to each of the blocks of the smartphone 900 illustrated in FIG. 21 via power supply lines partially indicated by dashed lines in the drawing. The auxiliary controller 919 causes, for example, necessary minimum functions of the smartphone 900 to be operated in a sleep mode.

Note that the smartphone 900 may operate as a wireless access point (software AP) as the processor 901 executes the function of an access point at an application level. In addition, the wireless communication interface 913 may have the function of a wireless access point.

### (5-2. Second application example)

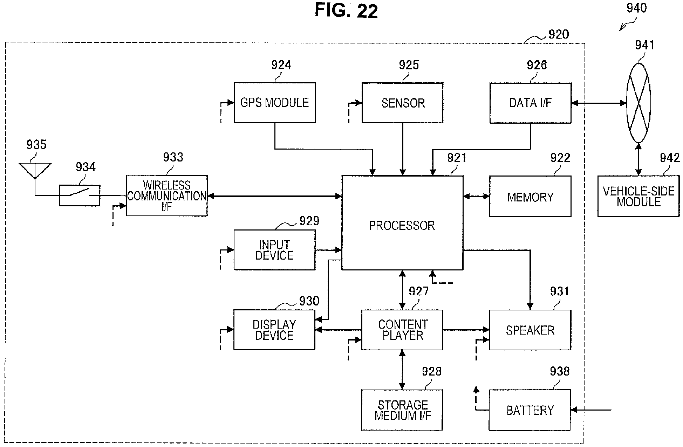

FIG. 22 is a block diagram illustrating an example of a schematic configuration of a car navigation device 920 to which the technology of the present disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be, for example, a CPU or an SoC controlling a navigation function and other functions of the car navigation device 920. The memory 922 includes RAM and ROM storing data and programs executed by the processor 921.

The GPS module 924 measures a position of the car navigation device 920 (for example, latitude, longitude, and altitude) using GPS signals received from a GPS satellite. The sensor 925 can include a sensor group including, for example, a gyro sensor, a geomagnetic sensor, a barometric sensor, and the like. The data interface 926 is connected with an in-vehicle network 941 via, for example, a terminal (not illustrated) to acquire data generated on the vehicle side such as car speed data.

The content player 927 reproduces content stored in a storage medium (for example, a CD or a DVD) inserted into the storage medium interface 928. The input device 929 includes, for example, a touch sensor that detects touches on a screen of the display device 930, buttons, switches, and the like to receive operation or information input from a user. The display device 930 has a screen such as an LCD or an OLED display to display images of the navigation function or reproduced content. The speaker 931 outputs sounds of the navigation function or reproduced content.

The wireless communication interface 933 supports one or more wireless LAN standards of IEEE 802.11a, 11b, 11g, 11n, 11ac, 11ad, and 11ax and the like to execute wireless communication. The wireless communication interface 933 can communicate with another device via a wireless LAN access point in the infrastructure mode. In addition, the wireless communication interface 933 can directly communicate with another device in a direct communication mode such as an ad hoc mode or Wi-Fi Direct. The wireless communication interface 933 can typically have a baseband processor, an RF circuit, a power amplifier, and the like. The wireless communication interface 933 may be a one-chip module on which a memory that stores a communication control program, a processor that executes the program, and a relevant circuit are integrated. The wireless communication interface 933 may support another kind of wireless communication scheme such as a near-field communication scheme, a proximity wireless communication scheme, or the cellular communication scheme in addition to the wireless LAN scheme. The antenna switch 934 switches a connection destination of the antenna 935 among a plurality of circuits included in the wireless communication interface 933. The antenna 935 has a single or a plurality of antenna elements and is used for transmission and reception of wireless signals from and to the wireless communication interface 933.

Note that the car navigation device 920 may include a plurality of antennas, without being limited to the example of FIG. 22. In this case, the antenna switch 934 may be omitted from the configuration of the car navigation device 920.

The battery 938 supplies electric power to each of the blocks of the car navigation device 920 illustrated in FIG. 22 via power supply lines partially indicated by dashed lines in the drawing. In addition, the battery 938 accumulates electric power supplied from the vehicle side.

In addition, the wireless communication interface 933 may operate as the AP 200 described above, and provide wireless communication for a terminal of a user on the vehicle.

Further, the technology of the present disclosure may be realized as an in-vehicle system (or a vehicle) 940 including one or more blocks of the above-described car navigation device 920, the in-vehicle network 941, and a vehicle-side module 942. The vehicle-side module 942 generates vehicle-side data such as a vehicle speed, the number of engine rotations, or failure information and outputs the generated data to the in-vehicle network 941.

### (5-3. Third application example)

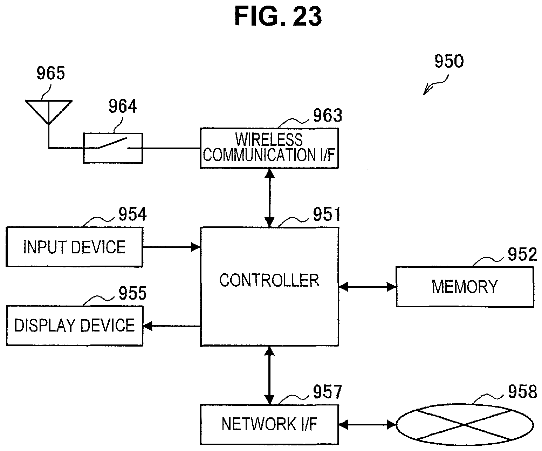

FIG. 23 is a block diagram illustrating an example of a schematic configuration of a wireless access point 950 to which the technology of the present disclosure can be applied. The wireless access point 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP) and operates various functions (for example, access limitation, routing, encryption, a fire wall, and log management) of the Internet Protocol (IP) layer and higher layers of the wireless access point 950. The memory 952 includes RAM and ROM and stores a program executed by the controller 951 and various kinds of control data (for example, a terminal list, a routing table, an encryption key, security settings, and a log).

The input device 954 includes, for example, a button or a switch, and receives operation performed by a user. The display device 955 includes an LED lamp and displays an operation status of the wireless access point 950.

The network interface 957 is a wired communication interface that connects the wireless access point 950 with a wired communication network 958. The network interface 957 may include a plurality of connection terminals. The wired communication network 958 may be a LAN such as Ethernet (registered trademark) or may be a wide area network (WAN).

The wireless communication interface 963 supports one or more wireless LAN standards of IEEE 802.11a, 11b, 11g, 11n, 11ac, 11ad, 11ax, and the like to supply wireless connection to a nearby terminal as an access point. The wireless communication interface 963 can typically include a baseband processor, an RF circuit, and a power amplifier. The wireless communication interface 963 may be a one-chip module in which memory storing a communication control program, a processor executing the program, and relevant circuits are integrated. The antenna switch 964 switches a connection destination of the antenna 965 among a plurality of circuits included in the wireless communication interface 963. The antenna 965 includes one antenna element or a plurality of antenna elements and is used to transmit and receive a wireless signal through the wireless communication interface 963.

### <6. Supplemental remarks>

The application examples of the present disclosure have been described above. Subsequently, preferential treatment in association with interference control by the AP 200 will be described.

As described above, the AP 200 performs interference control by changing the parameter information of the own BSS on the basis of the report frame received from the STA 100 or the interference control request frame received from the AP 200 of the OBSS. In this event, there is a possibility that throughput, communication quality, or the like, may be reduced by the parameter information of the own BSS being changed. For example, in the case where the AP 200 reduces the transmission power, a possibility that communication to the STA 100 located in a poor communication environment fails is increased. Further, in the case where the AP 200 changes the modulation scheme to a modulation scheme with lower transmission efficiency, there is a possibility that throughput is reduced.

Therefore, the AP 200 may also change other parameter information as preferential treatment to reduce influence on the throughput, the communication quality, or the like, in association with the parameter information of the own BSS being changed for interference control. For example, in the case where certain parameter information is changed for interference control, the AP 200 may reduce a contention window (hereinafter, referred to as "CW" for convenience) to increase transmission opportunities, may extend a frame length or may increase the transmission path utilization time to increase a maximum data amount which can be transmitted in access control of one time.

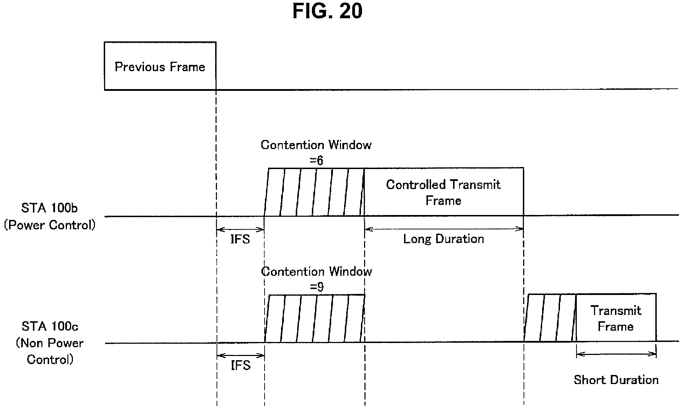

Here, an example of the preferential treatment in association with interference control will be described with reference to FIG .20. FIG. 20 is a diagram illustrating an example of the preferential treatment in association with interference control. FIG. 20 illustrates an STA 100b for which transmission power is reduced for interference control, and an STA 100c for which interference control is not performed. In this case, as illustrated in FIG. 20, in a CW used for data transmission of the STA 100b, a value smaller than a value of the CW used for data transmission of the STA 100c may be set (in the example in FIG. 20, the CW of the STA 100b is set at 6, and the CW of the STA 100c is set at 9). By this means, the STA 100b can obtain more transmission opportunities than the STA 100c. Further, as illustrated in FIG. 20, the transmission path utilization time may be set longer for the STA 100b than for the STA 100c. By this means, the STA 100b can transmit a larger amount of data in access control of one time than the STA 100c. The example described above is merely an example, and content of the preferential treatment in association with interference control is arbitrary.

### <7. Conclusion>

As described above, in the wireless LAN system according to the present embodiment, the AP 200 can grasp interference information without using a management device by the STA 100 transmitting the report frame to the AP 200. Further, the AP 200 can exchange information to be used for interference control without using a management device by exchanging the interference control request frame with the AP 200 of the OBSS. Then, the AP 200 can appropriately perform interference control by changing the parameter information of the own BSS on the basis of the interference control request frame. Further, in the case where certain parameter information is changed for interference control, the AP 200 can reduce influence on communication in association with interference control by changing other parameter information along with the parameter information as preferential treatment.

The preferred embodiment of the present disclosure has been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, steps in the operation of the AP 200 according to the present embodiment need not be always processed in chronological order in accordance with the order described as a flow chart. For example, steps in FIGS. 3, 4, FIGS. 14 to 16, and FIG. 18 may be processed in an order different from the order described in the drawing, or may be concurrently processed, as appropriate.

In addition, part of the configuration of the STA 100 may be provided outside the STA 100 as appropriate. Similarly, part of the configuration of the AP 200 may be provided outside the AP 200 as appropriate.

In addition, some functions of the STA 100 may be implemented by the control unit 130. That is, the control unit 130 may implement some functions of the wireless communication unit 110 or the data processing unit 120. Similarly, some functions of the AP 200 may be implemented by the control unit 230. That is, the control unit 230 may implement some functions of the wireless communication unit 210 or the data processing unit 220.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A communication device including:
   an acquisition unit configured to acquire first parameter information regarding an own BSS; and
   a transmission unit configured to transmit the first parameter information to a device belonging to another BSS which interferes with the own BSS.
(2) The communication device according to (1),
   in which the transmission unit transmits the first parameter information to the device to report the first parameter information to an access point device belonging to the other BSS.
(3) The communication device according to (2),
   in which the device is a station device or the access point device.
(4) The communication device according to any one of (1) to (3),
   in which the first parameter information includes transmission power information, modulation scheme information, receiving sensitivity information, BSS identification information, version information, type information, transmission path utilization time information, beacon transmission time information or frequency information.
(5) The communication device according to any one of (1) to (4),
   in which the communication device is an access point device, and
   the communication device further includes
   a reception unit configured to receive second parameter information regarding the other BSS, and
   a control unit configured to control change of the first parameter information on the basis of the second parameter information.
(6) The communication device according to (5),
   in which the control unit controls change of the first parameter information for each station device.
(7) The communication device according to (5) or (6),
   in which the control unit controls change of transmission power, a modulation scheme, receiving sensitivity, a transmission path utilization time, a beacon transmission time or a frequency on the basis of the second parameter information.
(8) The communication device according to any one of (5) to (7),
   in which the control unit controls change of the first parameter information so that throughput or communication quality is not negatively affected.
(9) The communication device according to (8),
   in which, in a case of making a change which reduces throughput or communication quality, to any parameter information included in the first parameter information, the control unit makes a change which improves the throughput or the communication quality, to parameter information other than the parameter information.
(10) The communication device according to any one of (1) to (4),
   in which the communication device is a station device, and
   the communication device further includes
   a reception unit configured to receive the first parameter information from an access point device of the own BSS.
(11) A communication control method executed by a computer, including:
   acquiring first parameter information regarding an own BSS; and
   transmitting the first parameter information to a device belonging to another BSS which interferes with the own BSS.
(12) A program for causing a computer to realize:
   acquiring first parameter information regarding an own BSS; and
   transmitting the first parameter information to a device belonging to another BSS which interferes with the own BSS.

### Reference Signs List

- 10: BSS
- 20, 30: information element included in report frame
- 40, 41: information element included in interference control request frame
- 100: STA
- 110: wireless communication unit
- 120: data processing unit
- 130: control unit
- 200: AP
- 210: wireless communication unit
- 220: data processing unit
- 230: control unit

## Claims

1. A communication device comprising:
an acquisition unit configured to acquire first parameter information regarding an own BSS; and
a transmission unit configured to transmit the first parameter information to a device belonging to another BSS which interferes with the own BSS.

2. The communication device according to claim 1,
wherein the transmission unit transmits the first parameter information to the device to report the first parameter information to an access point device belonging to the other BSS.

3. The communication device according to claim 2,
wherein the device is a station device or the access point device.

4. The communication device according to claim 1,
wherein the first parameter information includes transmission power information, modulation scheme information, receiving sensitivity information, BSS identification information, version information, type information, transmission path utilization time information, beacon transmission time information or frequency information.

5. The communication device according to claim 1,
wherein the communication device is an access point device, and
the communication device further includes
a reception unit configured to receive second parameter information regarding the other BSS, and
a control unit configured to control change of the first parameter information on a basis of the second parameter information.

6. The communication device according to claim 5,
wherein the control unit controls change of the first parameter information for each station device.

7. The communication device according to claim 5,
wherein the control unit controls change of transmission power, a modulation scheme, receiving sensitivity, a transmission path utilization time, a beacon transmission time or a frequency on a basis of the second parameter information.

8. The communication device according to claim 5,
wherein the control unit controls change of the first parameter information so that throughput or communication quality is not negatively affected.

9. The communication device according to claim 8,
wherein, in a case of making a change which reduces throughput or communication quality, to any parameter information included in the first parameter information, the control unit makes a change which improves the throughput or the communication quality, to parameter information other than the parameter information.

10. The communication device according to claim 1,
wherein the communication device is a station device, and
the communication device further includes
a reception unit configured to receive the first parameter information from an access point device of the own BSS.

11. A communication control method executed by a computer, comprising:
acquiring first parameter information regarding an own BSS; and
transmitting the first parameter information to a device belonging to another BSS which interferes with the own BSS.

12. A program for causing a computer to realize:
acquiring first parameter information regarding an own BSS; and
transmitting the first parameter information to a device belonging to another BSS which interferes with the own BSS.
